# EUROPÄISCHE PATENTSCHRIFT

(11) **EP 2 611 645 B1**
(45) Veröffentlichungstag und Bekanntmachung des Hinweises auf die Patenterteilung: **29.04.2015**
(21) Anmeldenummer: 10771358.8
(22) Anmeldetag: 31.08.2010
(51) Int. Cl.: B60L 11/18, H02H 3/12

(54) **VERFAHREN UND ANORDNUNG ZUR SPANNUNGSVERSORGUNG EINES ELEKTRISCHEN KONTAKTMITTELS**
METHOD AND ARRANGEMENT FOR SUPPLYING VOLTAGE TO AN ELECTRICAL CONTACT-FORMING MEANS
PROCÉDÉ ET AGENCEMENT POUR L'ALIMENTATION EN TENSION D'UN MOYEN DE CONTACT ÉLECTRIQUE

(43) Veröffentlichungstag der Anmeldung: 10.07.2013
(73) Patentinhaber: Siemens Aktiengesellschaft, 80333 München (DE)
(72) Erfinder: HOLTHUSEN, Sven, 90443 Nürnberg (DE); NOLEWAIKA, Martin, 91056 Erlangen (DE)
(86) Internationale Anmeldenummer: PCT/EP2010/062710
(87) Internationale Veröffentlichungsnummer: WO 2012/028176

(56) Entgegenhaltungen:
- WO-A1-93/09634
- WO-A1-95/29526
- US-A1- 2010 207 588

## Beschreibung

Die Erfindung betrifft ein Verfahren zur Spannungsversorgung eines elektrischen Kontaktmittels einer Ladeeinrichtung für ein elektrisch betriebenes Fahrzeug und eine Anordnung zur Spannungsversorgung eines elektrischen Kontaktmittels zum Anschluss eines elektrisch betriebenen Fahrzeugs.

In Zukunft werden im Straßenverkehr immer häufiger elektrisch betriebene Fahrzeuge unterwegs sein, insbesondere elektrisch betriebene Autos und Zweiräder. Diese elektrisch betriebenen Fahrzeuge verfügen über einen Elektromotor, der aus einer im Fahrzeug angeordneten Batterie mit elektrischer Energie versorgt wird. Um die elektrische Batterie bei Bedarf wieder aufladen zu können, werden sowohl im öffentlichen Verkehrsraum als auch auf privaten Grundstücken Batterieladeeinrichtungen in Form von beispielsweise Energieladesäulen oder hängenden Ladeeinrichtungen installiert werden. Solche Ladeeinrichtungen weisen mindestens ein ladeeinrichtungsseitiges elektrisches Kontaktmittel auf, insbesondere eine Steckdose, das elektrisch mit der Batterie des elektrischen betriebenen Fahrzeugs verbindbar ist. Diese elektrische Verbindung wird oftmals über ein Ladekabel erfolgen.

Bei solchen Ladeeinrichtungen kann der Fall auftreten, dass an dem ladeeinrichtungsseitigen elektrischen Kontaktmittel kein Fahrzeug angeschlossen ist, an dem Kontaktmittel aber elektrische Spannung anliegt. Dies stellt ein Sicherheitsrisiko dar, weil beispielsweise Passanten oder ein Bediener der Ladeeinrichtung mit dem spannungsführenden Kontaktmittel in Berührung kommen und dadurch verletzt werden könnte. Ebenso kann beim Laden der Fall auftreten, dass während des Ladevorgangs unbeabsichtigterweise das Ladekabel von dem Kontaktmittel getrennt wird, beispielsweise weil ein Passant über das Ladekabel stolpert und dadurch ein Stecker dieses Ladekabels aus dem Kontaktmittel herausgezogen wird. In diesem Fall würde das Kontaktmittel weiterhin mit der zum Laden erforderlichen Spannung versorgt werden, so dass an der Ladeeinrichtung ein unbelegtes, aber spannungsbeaufschlagtes Kontaktmittel angeordnet ist.

Der Erfindung liegt die Aufgabe zugrunde, ein Verfahren und eine Anordnung anzugeben, die eine sichere Energieversorgung von elektrisch betriebenen Fahrzeugen ermöglichen.

Diese Aufgabe wird erfindungsgemäß gelöst durch ein Verfahren nach dem unabhängigen Verfahrensanspruch und durch eine Anordnung nach dem unabhängigen Anordnungsanspruch. Vorteilhafte Weiterbildungen dieses Verfahrens und dieser Anordnung sind in den abhängigen Ansprüchen angegeben.

Erfindungsgemäß angegeben wird ein Verfahren zur Spannungsversorgung eines elektrischen Kontaktmittels einer Ladeeinrichtung für ein elektrisch betriebenes Fahrzeug, wobei das elektrische Kontaktmittel zum Anschluss des elektrisch betriebenen Fahrzeugs dient, wobei bei dem Verfahren
- das Kontaktmittel zunächst spannungsfrei geschaltet ist,
- während der Dauer einer Schalterbetätigung das Kontaktmittel nur dann temporär mit elektrischer Spannung versorgt wird, wenn an dem Kontaktmittel ein fahrzeugseitiges Kontaktmittel angeschlossen ist,
- mittels einer Stromüberwachungseinrichtung überwacht wird, ob elektrischer Strom durch das Kontaktmittel (zu einem an dem Kontaktmittel angeschlossenen Fahrzeug) fließt, und
- nur bei Fließen des Stroms (durch das Kontaktmittel zu dem Fahrzeug) das Kontaktmittel weiter mit Spannung versorgt wird.

Dabei ist besonders vorteilhaft, dass das Kontaktmittel zunächst spannungsfrei geschaltet ist. Von diesem spannungsfreien Kontaktmittel gehen folglich zunächst keine Gefährdungen aus. Daraufhin wird während der Dauer einer Schalterbetätigung (beispielsweise während der Dauer der Betätigung eines Tasters durch einen Benutzer der Ladeeinrichtung) das Kontaktmittel vorübergehend mit elektrischer Spannung versorgt und mittels der Stromüberwachungseinrichtung überwacht, ob aufgrund der am Kontaktmittel anliegenden elektrischen Spannung ein Strom durch das elektrische Kontaktmittel zu einem an dem Kontaktmittel angeschlossenen Fahrzeug fließt. Wenn ein solcher elektrischer Strom durch das Kontaktmittel fließt, dann wird das Kontaktmittel auch nach Ende der Schalterbetätigung weiter mit Spannung versorgt.

Bei diesem Verfahren wird also vorteilhafterweise sichergestellt, dass ein unbelegtes (d. h. nicht mit einem Fahrzeug elektrisch verbundenes) Kontaktmittel nicht dauerhaft mit elektrischer Spannung beaufschlagt wird. Nur wenn während der Dauer der Schalterbetätigung ein elektrischer Strom durch das Kontaktmittel fließt (weil das Kontaktmittel belegt ist, d. h. das Kontaktmittel elektrisch mit dem Fahrzeug verbunden ist), dann wird das Kontaktmittel auch nach Ende der Schalterbetätigung mit elektrischer Spannung versorgt.

Das Verfahren kann auch so ausgestaltet sein, dass
- mittels der Stromüberwachungseinrichtung (weiter/fortdauernd) überwacht wird, ob der elektrische Strom durch das Kontaktmittel (zu dem Fahrzeug) fließt, und
- nur bei Fließen des Stroms das Kontaktmittel weiter mit Spannung versorgt wird und bei einer Unterbrechung des Stromflusses das Kontaktmittel spannungsfrei geschaltet wird.

Durch die Stromüberwachungseinrichtung wird vorteilhafterweise erkannt, wenn eine Unterbrechung des Stromflusses durch das Kontaktmittel auftritt. Eine derartige Unterbrechung des Stromflusses kann insbesondere auftreten, wenn ein das Kontaktmittel und das Fahrzeug verbindendes Kabel beabsichtigt oder unbeabsichtigt von dem Kontaktmittel getrennt wird (also z. B. ein Stecker dieses Ladekabels aus einem als Steckdose ausgestalteten Kontaktmittel herausgezogen wird). In einem solchen Fall wird vorteilhafterweise das Kontaktmittel spannungsfrei geschaltet, so dass von diesem dann keine Gefahr mehr ausgeht.

Das Verfahren ist derart ausgestaltet, dass während der Dauer der Schalterbetätigung das Kontaktmittel nur dann temporär mit Spannung versorgt wird, wenn an dem Kontaktmittel ein fahrzeugseitiges Kontaktmittel angeschlossen ist. Derart wird vorteilhafterweise sichergestellt, dass während der Dauer der Schalterbetätigung nur dann das Kontaktmittel mit Spannung beaufschlagt wird, wenn an dem Kontaktmittel ein fahrzeugseitiges Kontaktmittel (z.B. der Stecker des Ladekabels des Fahrzeugs) angeschlossen ist. Dabei kann die Erkennung, ob an dem Kontaktmittel ein fahrzeugseitiges Kontaktmittel angeschlossen ist, beispielsweise mittels eines Hilfskontaktes erfolgen, der bei Anschluss des fahrzeugseitigen Kontaktmittels an das Kontaktmittel betätigt wird.

Das Verfahren kann auch so ablaufen, dass zusätzlich mittels eines Leitungsschutzschalters der durch das Kontaktmittel fließende Strom überwacht wird und bei Überschreiten eines vorgegebenen Stromwertes das Kontaktmittel spannungsfrei geschaltet wird. Mittels eines solchen Leitungsschutzschalters wird vorteilhafterweise das Kontaktmittel spannungsfrei geschaltet, wenn der durch das Kontaktmittel fließende Strom unzulässig hoch wird (weil beispielsweise ein Kurzschluss aufgetreten ist).

Das Verfahren kann auch so ausgestaltet sein, dass zusätzlich mittels eines Fehlerstromschutzschalters der durch das Kontaktmittel fließende Strom überwacht wird und bei Überschreiten eines vorgegebenen Fehlerstromwertes das Kontaktmittel spannungsfrei geschaltet wird. Bei dieser Variante des erfindungsgemäßen Verfahrens wird vorteilhafterweise das Kontaktmittel auch dann spannungsfrei geschaltet, wenn mittels des Fehlerstromschutzschalters erkannt wird, dass ein unerlaubt großer Fehlerstrom auftritt (weil beispielsweise eine Isolierung des Ladekabels defekt ist und an dieser Stelle ein Kriechstrom das Ladekabel verlässt).

Erfindungsgemäß angegeben wird weiterhin eine Anordnung zur Spannungsversorgung eines elektrischen Kontaktmittels, insbesondere einer Steckdose, zum Anschluss eines elektrisch betriebenen Fahrzeugs mit
- einer Stromüberwachungseinrichtung zum Überwachen des durch das Kontaktmittel (zu dem Fahrzeug) fließenden elektrischen Stroms, und
- einer Schalteinrichtung, die das Kontaktmittel zunächst spannungsfrei schaltet, die während der Dauer einer Schalterbetätigung das Kontaktmittel temporär mit elektrischer Spannung versorgt, und die nur bei Fließen des Stroms durch das Kontaktmittel (zu dem Fahrzeug) das Kontaktmittel weiter mit Spannung versorgt,
wobei die Anordnung so ausgestaltet ist, dass sie während der Dauer der Schalterbetätigung das Kontaktmittel nur dann temporär mit Spannung versorgt, wenn an dem Kontaktmittel ein fahrzeugseitiges Kontaktmittel angeschlossen ist.

Diese Anordnung kann vorteilhafterweise so ausgestaltet sein, dass sie mittels der Stromüberwachungseinrichtung weiter überwacht, ob der elektrische Strom durch das Kontaktmittel (zu dem Fahrzeug) fließt, und nur bei Fließen des Stroms das Kontaktmittel weiter mit Spannung versorgt oder bei einer Unterbrechung des Stromflusses das Kontaktmittel spannungsfrei schaltet.

Die Anordnung kann weiterhin einen Leitungsschutzschalter aufweisen, der zusätzlich den durch das Kontaktmittel flieβenden Strom überwacht und bei Überschreiten eines vorgegebenen Stromwertes das Kontaktmittel spannungsfrei schaltet.

In einer weiteren Ausführungsform kann die Anordnung einen Fehlerstromschutzschalter aufweisen, der zusätzlich den durch das Kontaktmittel fließenden Strom überwacht wird und bei Überschreiten eines vorgegebenen Fehlerstromwertes das Kontaktmittel spannungsfrei schaltet.

Im Folgenden wird die Erfindung anhand von Ausführungsbeispielen näher erläutert. Dazu ist in
- Figur 1: ein Beispiel einer Anordnung und eines Verfahrens zur Spannungsversorgung eines elektrischen Kontaktmittels gemäß dem Stand der Technik und in
- Figur 2: ein Ausführungsbeispiel einer solchen Anordnung und eines solchen Verfahrens dargestellt.

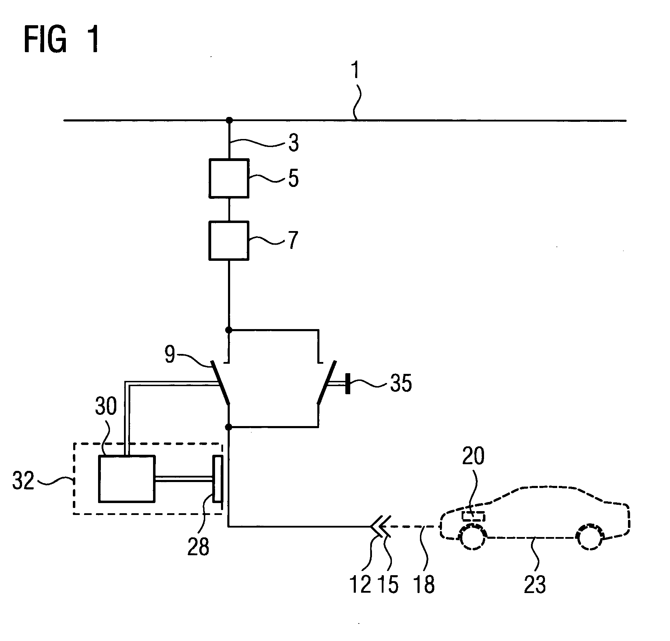

In Figur 1 ist schematisch ein Ausschnitt aus einem Energieversorgungsnetz 1 dargestellt, bei dem es sich im Ausführungsbeispiel um ein einphasiges Wechselspannungsenergieversorgungsnetz mit einer Spannung von 230 V handelt. Ein solches einphasiges Wechselspannungsenergieversorgungsnetz kann z.B. Spannungen zwischen 110 V und 240 V aufweisen. Alternativ können aber auch andere Energieversorgungsnetze eingesetzt werden, beispielsweise dreiphasige Wechselspannungsenergieversorgungsnetze mit Spannungen von 400 V. Solche dreiphasigen Wechselspannungsenergieversorgungsnetze können z.B. Spannungen zwischen 380 V und 480 V aufweisen.

Von diesem Energieversorgungsnetz 1 verläuft ein Strompfad 3 über einen Leitungsschutzschalter 5, einen Fehlerstromschutzschalter 7 und einen zunächst geöffneten elektrischen Kontakt 9 zu einem ladeeinrichtungsseitigen Kontaktmittel 12. Das ladeeinrichtungsseitige Kontaktmittel 12 ist mit einem fahrzeugseitigen Kontaktmittel 15 elektrisch verbindbar. Im Ausführungsbeispiel handelt es sich bei dem ladeeinrichtungsseitigen Kontaktmittel 12 um eine Steckdose und bei dem fahrzeugseitigen Kontaktmittel 15 um einen Stecker eines Ladekabels 18. Dieses Ladekabel 18 ist elektrisch mit einer Batterie 20 eines elektrisch betriebenen Fahrzeugs 23 verbunden.

Zunächst ist das fahrzeugseitige Kontaktmittel 15 noch nicht mit dem ladeeinrichtungsseitigen Kontaktmittel 12 elektrisch verbunden. Aus diesem Grunde sind das fahrzeugseitige Kontaktmittel, das Fahrzeugladekabel und das Fahrzeug mit gestrichelten Linien dargestellt.

An einer elektrischen Verbindungsleitung zwischen dem elektrischen Kontakt 9 und dem ladeeinrichtungsseitigen Kontaktmittel 12 ist ein Stromsensor 28 angeordnet, welcher den durch das Kontaktmittel 12 zu dem Fahrzeug fließenden Strom überwacht. Dieser Stromsensor 28 ist mit einer Auswerteelektronik 30 verbunden, welche bei Überschreiten eines ersten vorgegebenen Stromwertes den elektrischen Kontakt 9 schließt bzw. bei Unterschreiten eines zweiten vorgegebenen Stromwertes den elektrischen Kontakt 9 wieder öffnet. Dabei können der erste vorgegebene Stromwert und der zweite vorgegebene Stromwert individuell festgelegt werden. Der Stromsensor 28 und die Auswerteelektronik 30 sind Teil einer Stromüberwachungseinrichtung 32. Die Stromüberwachungseinrichtung 32 und der elektrische Kontakt 9 können beispielsweise mittels eines als solches bekannten Stromrelais realisiert sein.

Parallel zu dem elektrischen Kontakt 9 ist ein elektrischer Schalter 35 geschaltet, der im Ausführungsbeispiel manuell betätigbar ist. Dieser Schalter kann z.B. als ein Ein-Taster ausgestaltet sein. Der elektrische Kontakt 9 und der Schalter 35 sind Teile einer Schalteinrichtung.

Das Verfahren läuft wie folgt ab:
Zunächst ist an dem Kontaktmittel 12 kein elektrisch betriebenes Fahrzeug angeschlossen. Der elektrische Kontakt 9 und der Schalter 35 sind geöffnet. Daher ist das Kontaktmittel 12 elektrisch bzw. galvanisch von dem Energieversorgungsnetz 1 getrennt, das Kontaktmittel 12 ist also spannungsfrei. Nachdem das elektrisch betriebene Fahrzeug 23 mittels des Ladekabels 18 und des fahrzeugseitigen Kontaktmittels 15 (hier: Stecker 15) mit dem ladeeinrichtungsseitigen Kontaktmittel 12 verbunden ist und (beispielsweise manuell von einem Fahrer des Fahrzeugs) ein Schalter 35 betätigt worden ist, ist während der Dauer der Schalterbetätigung das Kontaktmittel 12 über den Schalter 35 mit dem Energieversorgungsnetz 1 verbunden. Das Kontaktmittel 12 wird also zumindest temporär während der Dauer der Schalterbetätigung mit elektrischer Spannung versorgt. Aufgrund dieser an dem Kontaktmittel 12 anliegenden elektrischen Spannung fließt ein Strom über das fahrzeugseitige Kontaktmittel 15 und das Ladekabel 18 zu der Batterie 20 des Fahrzeugs 23. Dieser über/durch das Kontaktmittel 12 fließende Strom wird von dem Stromsensor 28 gemessen und ein entsprechendes Messsignal zu der Auswerteelektronik 30 übertragen. Sobald der von dem Stromsensor 28 gemessene Strom einen ersten vorgegebenen Stromwert (ersten Schwellwert) überschreitet, erkennt die Auswerteelektronik 30, dass ein elektrischer Strom über/durch das Kontaktmittel 12 fließt und schließt den elektrischen Kontakt 9. Mit anderen Worten gesagt, zieht das Stromrelais an und schließt den Kontakt 9, wodurch das Kontaktmittel 12 mit dem Energieversorgungsnetz 1 verbunden wird. Daraufhin wird über den elektrischen Kontakt 9 auch bei einem Öffnen des Schalters 35 (Loslassen des Tasters 35) das Kontaktmittel 12 mit elektrischer Spannung versorgt. Der zu dem Fahrzeug durch das Kontaktmittel 12 flieβende Strom (Batterieladestrom) fließt nun vom Energieversorgungsnetz 1 über den Leitungsschutzschalter 5, den Fehlerstromschutzschalter 7 und den elektrischen Kontakt 9 zu dem Kontaktmittel 12 und weiter zur Batterie 20 des Fahrzeugs 23. Die Batterie des Fahrzeugs kann nun aufgeladen werden. Der Ladevorgang kann zwischen einigen Minuten und mehreren Stunden dauern.

Während des Ladevorgangs wird der durch das Kontaktmittel 12 fließende Strom mittels der Stromüberwachungseinrichtung 32 fortdauernd überwacht. Sobald dieser Stromfluss unterbrochen wird (weil beispielsweise das fahrzeugseitige Kontaktmittel 15 aus dem als Steckdose ausgebildeten Kontaktmittel 12 herausgezogen wird), stellt die Auswerteelektronik 30 bei Unterschreiten eines zweiten vorgegebenen Stromwertes (zweiten Schwellwertes) eine Unterbrechung des Stromflusses fest und öffnet den elektrischen Kontakt 9. Mit anderen Worten gesagt, fällt das Stromrelais ab und trennt automatisch das Kontaktmittel 12 galvanisch vom Energieversorgungsnetz 1. Dadurch wird das Kontaktmittel 12 spannungsfrei geschaltet.

Wenn das Fahrzeug zu einem späteren Zeitpunkt wieder mit dem Kontaktmittel 12 elektrisch verbunden wird und der Schalter 35 betätigt wird, beginnt der beschriebene Verfahrensablauf von Neuem.

Weiterhin wird der Ladevorgang durch den Leitungsschutzschalter 5 abgesichert. Dieser Leitungsschutzschalter 5 überwacht ständig den durch das Kontaktmittel 12 fließenden Strom und schaltet bei Überschreiten eines vorgegebenen Maximalstromwertes das Kontaktmittel spannungsfrei. Mit Hilfe dieses als solchen bekannten Leitungsschutzschalters wird insbesondere ein Schutz vor Überströmen, wie z. B. Kurzschlussströmen, erreicht.

Zusätzlich wird das Kontaktmittel 12 mittels eines Fehlerstromschutzschalters 7 abgesichert. Dieser Fehlerstromschutzschalter erkennt das Auftreten von Fehlerströmen, beispielsweise von Leckströmen, die aufgrund einer mangelhaften Isolierung des Ladekabels 18 oder der Batterie 20 auftreten.

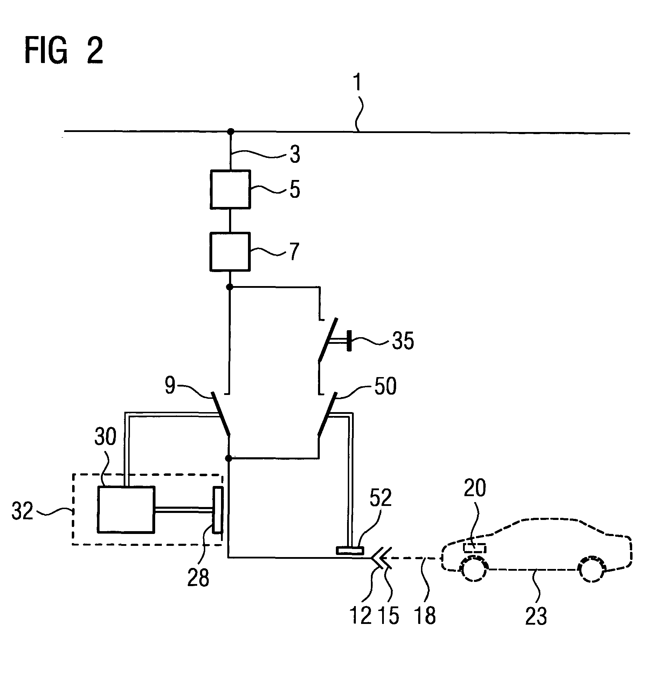

In Figur 2 ist ein Ausführungsbeispiel des erfindungsgemäßen Verfahrens und der erfindungsgemäßen Anordnung dargestellt. Dieses Ausführungsbeispiel unterscheidet sich von dem Beispiel gemäß Stand der Technik und gemäß der Figur 1 dadurch, dass in Reihe zu dem Schalter 35 ein weiterer Kontakt 50 geschaltet ist, wobei diese Reihenschaltung parallel zu dem Kontakt 9 angeordnet ist. Der Kontakt 50 wird nur dann geschlossen, wenn das fahrzeugseitige Kontaktmittel 15 elektrisch mit dem ladeeinrichtungsseitigen Kontaktmittel 12 verbunden ist. Diese elektrische Verbindung zwischen ladeeinrichtungsseitigem Kontaktmittel und fahrzeugseitigem Kontaktmittel (d. h. im Ausführungsbeispiel zwischen der Steckdose der Ladeeinrichtung und dem Stecker des Ladekabels) wird mittels eines Hilfskontaktes 52 erkannt, der bei dem Kontaktmittel 12 angeordnet ist und durch das fahrzeugseitige Kontaktmittel 15 geschlossen wird.

Das in dieser Anordnung ablaufende Verfahren unterscheidet sich von dem im Zusammenhang mit der Figur 1 beschriebenen Verfahren lediglich dadurch, dass das Verfahren durch Betätigen des Schalters 35 nur dann gestartet werden kann, wenn an dem Kontaktmittel 12 mittels des fahrzeugseitigen Kontaktmittels 15 das Fahrzeug 23 angeschlossen ist. Nur in diesem Fall wird mittels des Hilfskontaktes 52 der weitere Kontakt 50 geschlossen. Dann wird das Kontaktmittel 12 über den Schalter 35 und den Kontakt 50 während der Dauer der Betätigung des Schalters 35 mit elektrischer Spannung versorgt. Wenn jedoch kein fahrzeugseitiges Kontaktmittel 15 mit dem ladeeinrichtungsseitigen Kontaktmittel 12 verbunden ist, so ist der weitere Kontakt 50 geöffnet und das Kontaktmittel 12 bleibt dauernd galvanisch von dem Energieversorgungsnetz 1 getrennt und ist damit spannungsfrei geschaltet.

Es wurde ein Verfahren und eine Anordnung beschrieben, die sicherstellen, dass bei Ladeeinrichtungen für elektrisch betriebene Fahrzeuge vor Anschluss eines Fahrzeuges oder bei einer Unterbrechung des Ladevorgangs (z. B. durch unbeabsichtigtes Abziehen eines Steckers des Ladekabels von der Steckdose der Ladeeinrichtung) das ladeeinrichtungsseitige Kontaktmittel automatisch galvanisch vom Energieversorgungsnetz getrennt und damit spannungsfrei geschaltet wird. Dadurch wird eine Erhöhung der Betriebssicherheit erreicht.

## Patentansprüche

1. Verfahren zur Spannungsversorgung eines elektrischen Kontaktmittels (12) einer Ladeeinrichtung für ein elektrisch betriebenes Fahrzeug (23), wobei das elektrische Kontaktmittel (12) zum Anschluss des elektrisch betriebenen Fahrzeugs (23) dient, wobei bei dem Verfahren
- das Kontaktmittel (12) zunächst spannungsfrei geschaltet ist,
- während der Dauer einer Schalterbetätigung (35) das Kontaktmittel (12) nur dann temporär mit Spannung versorgt wird, wenn an dem Kontaktmittel (12) ein fahrzeugseitiges Kontaktmittel (15) angeschlossen ist,
- mittels einer Stromüberwachungseinrichtung (32) überwacht wird, ob elektrischer Strom durch das Kontaktmittel (12) fließt, und
- nur bei Fließen des Stroms das Kontaktmittel (12) weiter mit Spannung versorgt wird.

2. Verfahren nach Anspruch 1,
**dadurch gekennzeichnet, dass**
- mittels der Stromüberwachungseinrichtung (32) überwacht wird, ob der elektrische Strom durch das Kontaktmittel (12) fließt, und
- bei einer Unterbrechung des Stromflusses das Kontaktmittel (12) spannungsfrei geschaltet wird.

3. Verfahren nach einem der vorhergehenden Ansprüche,
**dadurch gekennzeichnet, dass**
- zusätzlich mittels eines Leitungsschutzschalters (5) der durch das Kontaktmittel (12) fließende Strom überwacht wird und
- bei Überschreiten eines vorgegebenen Stromwertes das Kontaktmittel (12) spannungsfrei geschaltet wird.

4. Verfahren nach einem der vorhergehenden Ansprüche,
**dadurch gekennzeichnet, dass**
- zusätzlich mittels eines Fehlerstromschutzschalters (7) der durch das Kontaktmittel (12) fließende Strom überwacht wird und
- bei Überschreiten eines vorgegebenen Fehlerstromwertes das Kontaktmittel (12) spannungsfrei geschaltet wird.

5. Anordnung zur Spannungsversorgung eines elektrischen Kontaktmittels (12) zum Anschluss eines elektrisch betriebenen Fahrzeugs (23) mit
- einer Stromüberwachungseinrichtung (32) zum Überwachen des durch das Kontaktmittel (12) fließenden elektrischen Stroms und
- einer Schalteinrichtung (9,35), die das Kontaktmittel (12) zunächst spannungsfrei schaltet, die während der Dauer einer Schalterbetätigung (35) das Kontaktmittel (12) temporär mit Spannung versorgt, und die nur bei Fließen des Stroms durch das Kontaktmittel (12) das Kontaktmittel (12) weiter mit Spannung versorgt,
**dadurch gekennzeichnet, dass**
- die Anordnung so ausgestaltet ist, dass sie während der Dauer der Schalterbetätigung (35) das Kontaktmittel (12) nur dann temporär mit Spannung versorgt, wenn an dem Kontaktmittel (12) ein fahrzeugseitiges Kontaktmittel (15) angeschlossen ist.

6. Anordnung nach Anspruch 5,
**dadurch gekennzeichnet, dass**
- diese so ausgestaltet ist, dass sie mittels der Stromüberwachungseinrichtung (32) überwacht, ob der elektrische Strom durch das Kontaktmittel (12) fließt, und bei einer Unterbrechung des Stromflusses das Kontaktmittel (12) spannungsfrei schaltet.

7. Anordnung nach Anspruch 5 oder 6,
**gekennzeichnet durch**
- einen Leitungsschutzschalter (5), der den **durch** das Kontaktmittel (12) fließenden Strom überwacht und bei Überschreiten eines vorgegebenen Stromwertes das Kontaktmittel (12) spannungsfrei schaltet.

8. Anordnung nach einem der Ansprüche 5 bis 7,
**gekennzeichnet durch**
- einen Fehlerstromschutzschalter (7), der den **durch** das Kontaktmittel (12) fließenden Strom überwacht und bei Überschreiten eines vorgegebenen Fehlerstromwertes das Kontaktmittel (12) spannungsfrei schaltet.

## Claims

1. Method for supplying voltage to an electrical contact means (12) of a charging device for an electrically operated vehicle (23), wherein the electrical contact means (12) serves to connect the electrically operated vehicle (23), wherein in the method
- the contact means (12) is first disconnected from the supply,
- voltage is only supplied to the contact means (12) temporarily during the duration of a switch actuation (35) when a vehicle-side contact means (15) is connected to the contact means (12),
- monitoring is performed by means of a current-monitoring device (32) to ascertain whether electric current is flowing through the contact means (12), and
- only when the current is flowing, voltage continues to be supplied to the contact means (12).

2. Method according to Claim 1,
**characterized in that**
- monitoring is performed by means of the current-monitoring device (32) to ascertain whether the electric current is flowing through the contact means (12), and
- in the event of an interruption to the current flow, the contact means (12) is disconnected from the supply.

3. Method according to one of the preceding claims, **characterized in that**
- the current flowing through the contact means (12) is monitored additionally by means of a line circuit breaker (5), and
- when a preset current value is exceeded, the contact means (12) is disconnected from the supply.

4. Method according to one of the preceding claims, **characterized in that**
- the current flowing through the contact means (12) is monitored additionally by means of a fault current circuit breaker (7), and
- in the event of a preset fault current value being exceeded, the contact means (12) is disconnected from the supply.

5. Arrangement for supplying voltage to an electrical contact means (12) for connecting an electrically operated vehicle (23) comprising
- a current-monitoring device (32) for monitoring the electric current flowing through the contact means (12), and
- a switching device (9, 35), which initially disconnects the contact means (12) from the supply, which supplies voltage temporarily to the contact means (12) during the duration of a switch actuation (35), and which continues to supply voltage to the contact means (12) only when the current is flowing through the contact means (12),
**characterized in that**
- the arrangement is configured in such a way that it supplies voltage temporarily to the contact means (12) during the duration of the switch actuation (35) only when a vehicle-side contact means (15) is connected to the contact means (12).

6. Arrangement according to Claim 5,
**characterized in that**
- said arrangement is configured in such a way that it monitors, by means of the current-monitoring device (32), whether the electric current is flowing through the contact means (12) and, in the event of an interruption to the current flow, disconnects the contact means (12) from the supply.

7. Arrangement according to Claim 5 or 6,
**characterized by**
- a line circuit breaker (5), which monitors the current flowing through the contact means (12) and in the event of a preset current value being exceeded, disconnects the contact means (12) from the supply.

8. Arrangement according to one of Claims 5 to 7,
**characterized by**
- a fault current circuit breaker (7), which monitors the current flowing through the contact mans (12) and in the event of a preset fault current value being exceeded, disconnects the contact means (12) from the supply.

## Revendications

1. Procédé d'alimentation en tension d'un moyen ( 12 ) de contact électrique d'un dispositif de charge d'un véhicule ( 23 ) électrique, dans lequel le moyen ( 12 ) de contact électrique sert à la connexion du véhicule ( 23 ) électrique, procédé dans lequel
- on ne met pas d'abord le moyen ( 12 ) de contact sous tension,
- pendant la durée d'un actionnement ( 35 ) d'un commutateur, on n'alimente le moyen ( 12 ) de contact en tension temporairement que lorsqu'un moyen ( 15 ) de contact du côté du véhicule est connecté au moyen ( 12 ) de contact,
- au moyen d'un dispositif ( 32 ) de contrôle du courant, on contrôle si du courant électrique passe dans le moyen ( 12 ) de contact, et
- on ne continue à alimenter le moyen ( 12 ) de contact en tension que si le courant passe.

2. Procédé suivant la revendication 1,
**caractérisé en ce que**
- au moyen du dispositif ( 32 ) de contrôle du courant, on contrôle si le courant électrique passe dans le moyen ( 12 ) de contact, et
- on ne met pas le moyen ( 12 ) de contact sous tension, si le flux de courant est interrompu.

3. Procédé suivant l'une des revendications précédentes, **caractérisé en ce que**
- on contrôle, en outre, au moyen d'un disjoncteur ( 5 ) de protection, le courant passant dans le moyen ( 12 ) de contact et
- si une valeur du courant donnée à l'avance est dépassée, on ne met pas le moyen ( 12 ) de contact sous tension.

4. Procédé suivant l'une des revendications précédentes, **caractérisé en ce que**
- on contrôle, en outre, au moyen d'un disjoncteur ( 7 ) de protection vis-à-vis d'un courant de fuite, le courant passant dans le moyen ( 12 ) de contact et
- si une valeur du courant de fuite donnée à l'avance est dépassée, on ne met pas le moyen ( 12 ) de contact sous tension.

5. Agencement d'alimentation en tension d'un moyen ( 12 ) de contact électrique de connexion d'un véhicule ( 23 ) électrique, comprenant
- un dispositif ( 32 ) de contrôle du courant pour contrôler le courant électrique passant dans le moyen ( 12 ) de contact et
- un dispositif ( 9, 35 ) de commutation, qui ne met pas d'abord le moyen ( 12 ) de contact sous tension, qui, pendant la durée d'un actionnement ( 35 ) du commutateur, alimente le moyen ( 12 ) de contact temporairement en tension et qui ne continue à alimenter le moyen ( 12 ) de contact en tension que si le courant passe dans le moyen ( 12 ) de contact,
**caractérisé en ce que**
- l'agencement est conformé de manière à alimenter, pendant la durée de 1'actionnement ( 35 ) du commutateur, le moyen ( 12 ) de contact, seulement temporairement en tension, si un moyen ( 15 ) de contact du côté du véhicule est connecté au moyen ( 12 ) de contact.

6. Agencement suivant la revendication 5,
**caractérisé en ce que**
- celui-ci est conformé de manière à contrôler, au moyen du dispositif ( 32 ) de contrôle du courant, si le courant électrique passe dans le moyen ( 12 ) de contact et, si le flux de courant est interrompu, à ne pas mettre le moyen ( 12 ) de contact sous tension.

7. Agencement suivant la revendication 5 ou 6,
**caractérisé par**
- un disjoncteur ( 5 ) de protection, qui contrôle le courant passant dans le moyen ( 12 ) de contact et qui, si une valeur du courant donnée à l'avance est dépassée, ne met pas le moyen ( 12 ) de contact sous tension.

8. Agencement suivant l'une des revendications 5 à 7,
**caractérisé par**
- un disjoncteur ( 7 ) de protection vis-à-vis d'un courant de fuite, qui contrôle le courant passant dans le moyen ( 12 ) de contact et qui, si une valeur du courant de fuite donnée à l'avance est dépassée, ne met pas le moyen ( 12 ) de contact sous tension.
